(19)

**Europäisches Patentamt**
**European Patent Office**
**Office européen des brevets**

(11) **EP 4 604 213 A1**

(12) **EUROPEAN PATENT APPLICATION**
published in accordance with Art. 153(4) EPC

(43) Date of publication:
**20.08.2025 Bulletin 2025/34**

(21) Application number: **23912798.8**

(22) Date of filing: **21.12.2023**

(51) International Patent Classification (IPC):
*H01M 4/525* (2010.01)      *H01M 4/505* (2010.01)
*H01M 4/131* (2010.01)      *H01M 10/052* (2010.01)
*H01M 4/02* (2006.01)

(52) Cooperative Patent Classification (CPC):
**H01M 4/02; H01M 4/131; H01M 4/505;**
**H01M 4/525; H01M 10/052;** Y02E 60/10

(86) International application number:
**PCT/KR2023/021344**

(87) International publication number:
**WO 2024/144123 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022 KR 20220184870**

(71) Applicant: **LG Energy Solution, Ltd.**
**Seoul 07335 (KR)**

(72) Inventors:
• **PARK, Sang Min**
**Daejeon 34122 (KR)**

• **KIM, Seul Ki**
**Daejeon 34122 (KR)**
• **KIM, Hyeong Il**
**Daejeon 34122 (KR)**
• **LEE, Sang Wook**
**Daejeon 34122 (KR)**
• **LHO, Eun Sol**
**Daejeon 34122 (KR)**
• **HWANG, Jin Tae**
**Daejeon 34122 (KR)**
• **OH, Su Yeon**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, AND POSITIVE ELECTRODE AND LITHIUM SECONDARY BATTERY WHICH COMPRISE SAME**

(57) The present invention relates to a positive electrode active material including: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, wherein the volume cumulative particle size distribution graph obtained from particle size analysis (PSD) of the positive electrode active material includes a peak $P_S$ on a side with the small particle size and a peak $P_L$ on a side with the large particle size, and wherein a B value derived from Equation 1 below is 4.0 to 17.0. The positive electrode active material is applied to a positive electrode to provide a lithium secondary battery in which the breakage of the positive electrode active material particles is suppressed, thereby improving lifespan and output characteristics, and reducing the amount of gas generated.

[Equation 1]

$$B = (D_{max}-D_L) / (D_S-D_{min})$$

wherein $D_{max}$ is the maximum particle diameter of the positive electrode active material, $D_{min}$ is the minimum particle diameter of the positive electrode active material, $D_L$ is the median particle diameter of the peak $P_L$, and $D_S$ is the median particle diameter of the peak $P_S$.

EP 4 604 213 A1

**Description**

**[Technical Field]**

CROSS-REFERENCE TO RELATED APPLICATIONS

This application claims the benefit of priority to Korean Patent Application No. 10-2022-0184870 filed on December 26, 2022, the disclosure of which is incorporated herein by reference in its entirety.

Technical Field

The present invention relates to a positive electrode active material for a lithium secondary battery, and a positive electrode and a lithium secondary battery including the same.

**[Background Art]**

A lithium secondary battery is generally composed of a positive electrode, a negative electrode, a separator, and an electrolyte, wherein the positive electrode and the negative electrode include an active material capable of intercalating and deintercalating lithium ions.

As a positive electrode active material for the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), etc. have been used. Among them, the lithium cobalt oxide has the advantages of high operating voltage and excellent capacity characteristics, but the price of cobalt, which is a raw material, is high and its supply is unstable, making it difficult to commercially apply it to a large-capacity battery. The lithium nickel oxide has poor structural stability, making it difficult to achieve sufficient lifespan characteristics. Meanwhile, the lithium manganese oxide has excellent stability, but has a problem of poor capacity characteristics. Therefore, in order to compensate for the problems of the lithium transition metal oxides containing Ni, Co, or Mn alone, lithium nickel-based transition metal oxides containing two or more transition metals have been developed, and in particular, a lithium nickel cobalt manganese oxide containing Ni, Co, and Mn are widely used in the field of electric vehicle batteries.

Conventional lithium nickel cobalt manganese oxide was generally in the form of a spherical secondary particle in which tens to hundreds of primary particles are aggregated. However, in the case of the lithium nickel cobalt manganese oxide in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particles of the positive electrode active material are broken or cracked, the contact area with an electrolyte increases, which increases generation of gas and deterioration of the active material due to side reactions with the electrolyte, thereby degrading lifespan characteristics.

**[Disclosure]**

**[Technical Problem]**

The present invention is intended to solve the above problems and provide a positive electrode active material that can improve energy density by applying a bimodal positive electrode active material, can suppress particle breakage and cracks during the electrode manufacturing and charging/discharging process, and has excellent rolling density.

In addition, the present invention is to provide a positive electrode and a lithium secondary battery with improved high-temperature lifespan and output characteristics and improved high-temperature storage characteristics due to low crack rate and thus reduced side reactions with electrolyte by including the above positive electrode active material.

**[Technical Solution]**

In order to solve the above problems, according to one aspect of the present invention, there is provided a positive electrode active material including: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, wherein the volume cumulative particle size distribution graph obtained from particle size distribution (PSD) of the positive electrode active material includes a peak $P_S$ on a side with the small particle size and a peak $P_L$ on a side with the large particle size, and wherein a B value derived from Equation 1 below is 4.0 to 17.0:

$$[\text{Equation 1}]$$

$$B = (D_{max}-D_L) / (D_S-D_{min})$$

wherein $D_{max}$ is the maximum particle diameter of the positive electrode active material, $D_{min}$ is the minimum particle diameter of the positive electrode active material, $D_L$ is the median particle diameter of the peak $P_L$, and $D_S$ is the median particle diameter of the peak $P_S$.

In order to solve the above problems, according to another aspect of the present invention, there is provided a positive electrode including the positive electrode active material according to the present invention.

In order to solve the above problems, according to still another aspect of the present invention, there is provided a lithium secondary battery including the positive electrode according to the present invention.

[Advantageous Effects]

The positive electrode active material for a lithium secondary battery according to the present invention includes a lithium nickel-based transition metal oxide in the form of a single particle and/or a quasi-single particle with excellent particle strength, and a lithium nickel-based transition metal oxide in the form of a secondary particle that is an aggregate of primary particles, thereby reducing the occurrence of particle breakage or cracks caused by rolling when manufacturing the electrode, achieving an excellent level of rolling density, and improving energy density due to bimodal particle size characteristics.

In addition, in the positive electrode active material for a lithium secondary battery according to the present invention, particle breakage can be minimized, thereby reducing side reactions with the electrolyte and thus the amount of gas generation. Further, changes in the crystal structure can be minimized during the charging and discharging process, thereby suppressing the deterioration of the positive electrode active material, and thus improving high-temperature lifespan characteristics and high-temperature storage characteristics. Moreover, the output characteristics can be excellent due to a low resistance increase rate.

[Best Modes of the Invention]

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In the present disclosure, a "single particle" is a particle formed of a single nodule. In the present disclosure, the "nodule" refers to a particle unit that may be a single crystal lacking a crystalline grain boundary, or a polycrystal with no apparent grain boundary when observed at a field of view of 5,000 to 20,000 times using a scanning electron microscope (SEM). In the present disclosure, a "quasi-single particle" refers to a particle that is a composite formed of 30 or less nodules.

In the present disclosure, a "secondary particle" refers to a particle formed by agglomerating tens to hundreds of primary particles. More specifically, the secondary particle is an agglomerate of 50 primary particles or more.

The term "particle" used in the present disclosure may include any one or all of a single particle, a quasi-single particle, a primary particle, a nodule, and a secondary particle.

In the present disclosure, a "$D_{50}$" refers to a particle size based on 50% of a volume cumulative particle size distribution of a positive electrode active material powder. The average particle diameter $D_{50}$ can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

Hereinafter, the present invention will be described in more detail.

**Positive Electrode Active Material**

A positive electrode active material according to the present invention includes: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, wherein the volume cumulative particle size distribution graph obtained from particle size distribution (PSD) of the positive electrode active material includes a peak $P_S$ on a side with the small particle size and a peak $P_L$ on a side with the large particle size, and wherein a B value derived from Equation 1 below is 3.0 to 17.0:

$$[\text{Equation 1}]$$

$$B = (D_{max}-D_L) / (D_S-D_{min})$$

wherein $D_{max}$ is the maximum particle diameter of the positive electrode active material, $D_{min}$ is the minimum particle diameter of the positive electrode active material, $D_L$ is the median particle diameter of the peak $P_L$, and $D_S$ is the median particle diameter of the peak $P_S$.

The lithium nickel-based transition metal oxide in the form of a single particle and/or a quasi-single particle has higher particle strength compared to conventional lithium nickel-based transition metal oxides in the form of a secondary particle in which tensto hundreds of primary particles are aggregated, and thus, there is less particle breakage during rolling. In addition, the lithium nickel-based transition metal oxide in the form of a single particle or quasi-single particle according to the present invention has a small number of sub-components(i.e., nodules) constituting the particle, whereby there is little change in primary particles due to the volume expansion and contraction thereof during charging and discharging, and thus, the occurrence of cracks inside the particles is also significantly reduced. However, the lithium nickel-based transition metal oxide in the form of the single particle and/or quasi-single particle requires a high-temperature firing process, which may also affect the formation of crystal structures (layers), resulting in a decrease in electrochemical performance. When the particle size is increased in order to reduce the generation of fine particles and reduce the specific surface area of the powder, the above problem may become very serious.

Accordingly, two particles with different median particle sizes may be mixed and used. In this case, in the rolling process, the small particles are mainly placed between the large particles and serve as a buffer, thereby minimizing porosity and thus increasing the rolling density. However, in this case, the small particles acting as a buffer receive a large linear pressure, so there is a high probability that cracks will occur in the particles. The particle diameter of large particles and small particles and their respective particle size distributions may be major factors in determining the arrangement structure between the particles, which may result in different effects, such as damage to the particles themself or the generation of fine particles away from the particles.

In other words, in order to implement a high-density electrode, it is important to determine the characteristics of particles applied as an active material, such as the shape, size, and distribution thereof. Accordingly, the present inventors have proposed particle characteristics that could solve the above problems and take advantage of two types of particles by mixing a large-particle-diameter lithium nickel-based transition metal oxide in the form of a secondary particle, and a small-particle-diameter lithium nickel-based transition metal oxide in the form of a single particle and/or a quasi-single particle.

According to an embodiment of the present invention, the volume cumulative particle size distribution graph obtained from particle size distribution (PSD) of the positive electrode active material has a peak $P_S$ on a side with the small particle size and a peak $P_L$ on a side with the large particle size, and a B value derived from Equation 1 below is 4.0 to 17.0:

$$[\text{Equation 1}]$$

$$B = (D_{max}-D_L) / (D_S-D_{min})$$

wherein $D_{max}$ is the maximum particle diameter of the positive electrode active material, $D_{min}$ is the minimum particle diameter of the positive electrode active material, $D_L$ is the median particle diameter of the peak $P_L$, and $D_S$ is the median particle diameter of the peak $P_S$.

The volume cumulative particle size distribution graph can be measured using a laser diffraction method. For example, the volume cumulative particle size distribution graph can be obtained by dispersing the lithium nickel-based transition metal oxide powder in a dispersion medium, introduced it into a commercially available laser diffraction particle size measurement device, and irradiating an ultrasonic wave of about 28 kHz with an output of 60 W. Through this graph, various data applied in the present invention can be obtained.

The B refers to a shape of the peak Ps and the peak $P_L$, that is, a ratio of peak width, appearing in the particle size distribution graph, and may be measured slightly differently from a full width at half maximum (FWHM), which is generally referred to as a peak width. For example, the full width at half maximum refers to a peak width at a half position of the maximum peak intensity, and the peak shape according to the present invention is to determine the degree of difference between the minimum particle diameter and the maximum particle diameter from the center particle diameter. Even if the fullwidth at half maximum is the same, the difference between the minimum particle diameter and the maximum particle diameter from the center particle diameter may vary greatly. That is, when the ratio of the widths of the two peaks satisfies the above range, a lithium secondary battery with improved performance can be obtained by improving energy density and suppressing cracks in the active material particles.

If the B value is less than 4.0, the rolling density decreases, the degree of particle breakage increases during rolling, and gas generation increases due to a side reaction with an electrolyte, which may reduce the lifespan and increase resistance. In addition, even when the B value is greater than 17.0, the rolling density decreases and the breakage of the large-diameter particles increases, which may lead to a decrease in performance such as energy density. Accordingly, the B value may preferably be 5.0 or more, 5.5 or more, 6.0 or more, 6.5 or more, or 6.8 or more, and 16.0 or less, 15.5 or less, 14.0 or less, 13.0 or less, 11.0 or less, or 10.0 or less.

According to one embodiment of the present invention, the positive electrode active material may have a $D_{50}$ of 7 $\mu$m to 17 $\mu$m. The $D_{50}$ is an average particle diameter of 50% of the volume accumulation for a mixed positive electrode active material in which a large-diameter lithium transition metal oxide and a small-diameter lithium transition metal oxide are mixed, and may be 8 $\mu$m or more, 9 $\mu$m or more, or 10 $\mu$m or more, and 16 $\mu$m or less, 15 $\mu$m or less, or 14 $\mu$m or less. The above range of $D_{50}$ is a range in which an optimal point between the crack rate and the rolling density can be found. It may be desirable to control other particle size characteristics at a level with $D_{50}$ in the above range.

Additionally, the positive electrode active material may have a $D_{max}$ of 56 $\mu$m or less, and a $D_{min}$ of 0.1 $\mu$m or more. The $D_{max}$ is a particle diameter of the particle with the largest particle diameter among the total particles, and when particles larger than 56 $\mu$m are included, the electrode process and energy density may be adversely affected. The $D_{min}$ is a particle diameter of the particle with the smallest particle diameter among the total particles, and when it is smaller than 0.1 $\mu$m, the proportion of particles less than 1 $\mu$m increases, so side reactions may become more severe due to an increase in the amount of fines generated. Thus, since the content of a conductive material and a binder must be increased when configuring the electrode mixture, the energy density may decrease. Therefore, it is necessary to control the particle size so that particles smaller than the above diameter are not generated. That is, preferably, the $D_{max}$ may be 53 $\mu$m or less, 50 $\mu$m or less, 47 $\mu$m or less, 43 $\mu$m or less, or 41 $\mu$m or less, and $D_{min}$ may be 0.3 $\mu$m or more, 0.5 $\mu$m or more, 0.55 $\mu$m or more, 0.6 $\mu$m or more, or 0.7 $\mu$m or more.

According to one embodiment of the present invention, the positive electrode active material may have a $D_L$ of 5 $\mu$m to 20 $\mu$m and a $D_S$ of 1 $\mu$m to 10 $\mu$m. Preferably, the $D_L$ may be 7 $\mu$m or more, 9 $\mu$m or more, 11 $\mu$m or more, 13 $\mu$m or more, or 14 $\mu$m or more, and 19 $\mu$m or less, 18 $\mu$m or less, or 17 $\mu$m or less. Preferably, the $D_S$ may be 1.5 $\mu$m or more, 2 $\mu$m or more, 2.3 $\mu$m or more, or 2.4 $\mu$m or more, and 9 $\mu$m or less, 7 $\mu$m or less, or 5 $\mu$m or less. The $D_{50}$ of the lithium nickel-based transition metal oxide with a large particle diameter may be similar to the $D_L$, and the $D_S$ may be similar to the $D_{50}$ of the lithium nickel-based transition metal oxide with a small particle size, but may not be substantially the same due to differences in peak broadness of the particle size distribution of each particle. The ranges of $D_L$ and $D_S$ are ranges set to suit the functions according to the roles that the large particle diameter and small particle diameter must play, respectively, and may be conditions required to achieve both the effects of improving rolling density and reducing crack rate.

Additionally, according to an embodiment of the present invention, a difference between the $D_L$ and $D_S$ may be 6 $\mu$m to 15 $\mu$m. If the difference between the two particle diameters is less than 6 $\mu$m, the energy density cannot be improved due to a decrease in the effect of bimodal characteristics, and the capacity characteristics may decrease due to a low rolling density itself. Additionally, when the difference is larger than 15 $\mu$m, performance is expected to deteriorate due to particle breakage of particles located in the small particle diameter distribution. Accordingly, it is desirable to control the difference between the two particle diameters within the above-mentioned range, preferably 7 $\mu$m or more, or 8 $\mu$m or more, and 14 $\mu$m or less, or 13 $\mu$m or less.

According to an embodiment of the present invention, in the volume cumulative particle size distribution graph obtained from particle size distribution (PSD) of the positive electrode active material, a ratio of the maximum value $I_S$ of the peak PS to the maximum value $I_L$ of the peak $P_L$ ($I_S/I_L$) may be 0.2 to 1.5. The ratio of the maximum values means a ratio of the maximum heights of the two peaks, and may mean a ratio between particles having a particle diameter that occupies the largest volume in each of the large-particle-diameter particles and the small-particle-diameter particles. If the particle with the largest volume particle diameter among the small-particle-diameter particles occupies more volume than the particle with the largest volume particle diameter among the large-particle-diameter particles, the rolling density and crack rate may become poor simultaneously, resulting in poor performance. Therefore, it may be desirable to carefully control particle size characteristics. Preferably, it may be 0.25 or more, 0.30 or more, 0.35 or more, or 0.40 or more, and 1.30 or less, 1.20 or less, 1.10 or less, 1.00 or less, 0.90 or less, 0.80 or less, 0.75 or less, 0.70 or less, or 0.66 or less. If it is at least 1.00 or less, it can more effectively contribute to improving rolling density, high temperature life characteristics, and resistance characteristics.

Additionally, a ratio of the integrated area As of the peak Ps to the integrated area $A_L$ of the peak $P_L$ ($A_S/A_L$) may be 0.4 to 1.0. If the ratio of the maximum values refers to a volume ratio of particles with the maximum volume particle diameter, the ratio of integrated areas may refer to the total volume ratio. When the ratio of the integrated areas is 0.4 to 1.0, the effect of lowering the crack rate while increasing the rolling density can be expected as described above. Preferably, the ratio of the integrated areas may be 0.45 or more, 0.50 or more, or 0.55 or more, and may be 0.95 or less, 0.90 or less, 0.85 or less, or 0.80 or less.

According to one embodiment of the present invention, the mixing weight ratio of the lithium nickel-based transition metal oxide with a small particle diameter and the lithium nickel-based transition metal oxide with a large particle diameter may be 90: 10 to 20:80. Preferably, it may be 80:20 or less, 70:30 or less, or 60:40 or less, and may be 30:70 or more, or 40:60 or more. If the above mixing ratio range is satisfied, the rolling density can be maximized by optimizing filling, and particle breakage can be reduced by reducing the linear pressure during rolling.

Meanwhile, the positive electrode active material according to the present invention may include a lithium nickel-based transition metal oxides, and specifically, a lithium nickel-based transition metal oxide having a composition shown in Chemical Formula 1 below:

[Chemical Formula 1] $\qquad$ $Li_{1+x}Ni_aCo_bM^1_cM^2_dO_{2-e}X_e$

wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \leq x \leq 0.5$, $0.5 \leq a < 1$, $0 < b \leq 0.4$, $0 < c \leq 0.4$, $0 \leq d \leq 0.05$, and $0 \leq e \leq 0.05$.

In Formula 1 above, $M^1$ is Mn, Al or a combination thereof, preferably Mn, or a combination of Mn and Al; and $M^2$ may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The $M^2$ element is not necessarily included, but when included in an appropriate amount, it can play a role in promoting grain growth during firing or improving crystal structure stability. In addition, X is an anion substituted for the oxygen site and may include N, P, S, F, or Cl.

The 1+x represents a molar ratio of lithium in the lithium nickel-based transition metal oxide, and may be $0 \leq x \leq 0.30$, $0 \leq x \leq 0.20$, or $0 \leq x \leq 0.15$.

The a represents a molar ratio of nickel among all metals except lithium in the lithium nickel-based transition metal oxide, and may be $0.60 \leq a < 1.00$, $0.70 \leq a < 1.00$, $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

The b represents a molar ratio of cobalt among all metals excluding lithium in the lithium nickel-based transition metal oxide, and may be $0 < b < 0.30$, $0.01 \leq b < 0.25$, $0.01 \leq b < 0.20$, or $0.01 \leq b \leq 0.15$.

The c represents a molar ratio of $M^1$ among all metals excluding lithium in the lithium nickel-based transition metal oxide, and may be $0 < c < 0.30$, $0.01 \leq c < 0.25$, $0.01 \leq c < 0.20$, or $0.01 \leq c \leq 0.15$.

The d represents a molar ratio of $M^2$ element among all metals excluding lithium in the lithium nickel-based transition metal oxide, and may be $0 \leq d \leq 0.05$, $0 \leq d \leq 0.03$, or $0 \leq d \leq 0.02$.

The e represents a molar ratio of element X among all non-metals excluding oxygen in the lithium nickel-based transition metal oxide, and may be $0 \leq e \leq 0.05$, $0 \leq e \leq 0.02$, or $0 \leq e \leq 0.01$.

Meanwhile, the lithium nickel-based transition metal oxide may further include, on the surface of the particle, a coating layer containing one or more coating elements selected from the group consisting of Al, Ti, W, B, F, P, Mg, Ni, Co, Fe, Cr, V, Cu, Ca, Zn, Zr, Nb. Mo, Sr, Sb, Bi, Si and S.

When the coating layer is present on the surface of the lithium nickel-based transition metal oxide particle, the contact between the electrolyte and the lithium nickel-based transition metal oxide can be suppressed by the coating layer, thereby having the effect of reducing transition metal elution or gas generation due to side reactions with the electrolyte.

Preferably, the coating layer may include Co as a coating element. When the coating layer containing Co is formed on the surface of the lithium nickel-based transition metal oxide particle in the form of a single particle and/or a quasi-single particle, an effect of improving output can be obtained along with an effect of suppressing side reactions with the electrolyte.

## Method of Manufacturing Positive Electrode Active Material

Next, a method of manufacturing the positive electrode active material powder of the present invention will be described.

The method of manufacturing the positive electrode active material powder according to the present invention includes the steps of: (S1) preparing a positive electrode active material precursor by adding a transition metal-containing solution containing cations of nickel (Ni), cobalt (Co) and $M^1$, a basic aqueous solution, and an ammonium solution and performing a coprecipitation reaction; and (S2) preparing a positive electrode active material powder by mixing the positive electrode active material precursor and a lithium raw material and heat-treating them.

Through the condition of the coprecipitation reaction and the firing conditions such as the firing temperature and time of the lithium raw material and precursor, the manufactured positive electrode active material may be in the form of a single particle formed of one nodule or a quasi-single particle that is a composite of 30 or less nodules, or in the form of a secondary particle that is an aggregate of primary particles. The positive electrode active material according to the present invention can be obtained by preparing a large-diameter lithium nickel-based transition metal oxide and a small-diameter lithium nickel-based transition metal oxide separately and then mixing them.

Hereinafter, each step of the method of manufacturing the positive electrode active material powder will be described in detail.

First, the transition metal-containing solution containing cations of nickel (Ni), cobalt (Co), and $M^1$ is prepared. For example, the transition metal-containing solution may include a nickel-containing raw material, a cobalt-containing raw material, and an $M^1$-containing raw material, wherein the $M^1$-containing raw material may be a manganese-containing raw material and/or an aluminum-containing raw material.

Thereafter, the positive electrode active material precursor can be prepared by adding an ammonium cation-containing complex forming agent and a basic aqueous solution to the transition metal solution and performing a coprecipitation reaction.

The nickel-containing raw material may be, for example, a nickel-containing acetate, nitrate, sulfate, halide, sulfide, hydroxide, oxide, oxyhydroxide, or the like, and specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, fatty acid nickel salt, nickel halide, or a combination thereof, but is not limited thereto.

The cobalt-containing raw material may be a cobalt-containing acetate, nitrate, sulfate, halide, sulfide, hydroxide, oxide, oxyhydroxide, or the like, and specifically, $Co(OH)_2$, $CoOOH$, $Co(OCOCH_3)_2 \cdot 4H_2O$, $Co(NO_3)_2 \cdot 6H_2O$, $CoSO_4$, $C_O(SO_4)_2 \cdot 7H_2O$, or a combination thereof, but is not limited thereto.

The manganese-containing raw material may be, for example, a manganese-containing acetate, nitrate, sulfate, halide, sulfide, hydroxide, oxide, oxyhydroxide, or a combination thereof, and specifically, a manganese oxide such as $Mn_2O_3$, $MnO_2$, $Mn_3O_4$, etc.; a manganese salt such as $MnCO_3$, $Mn(NO_3)_2$, $MnSO_4$, manganese acetate, dicarboxylic acid manganese salt, manganese citrate, fatty acid manganese salt; a manganese oxyhydroxide, manganese chloride, or a combination thereof, but is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halides, or a combination thereof.

The transition metal-containing solution can be prepared by adding the nickel-containing raw material, cobalt-containing raw material, and $M^1$-containing raw material to a solvent, specifically water, or a mixed solvent of organic solvents (e.g. alcohol, etc.) that can be mixed uniformly with water, or by mixing an aqueous solution of the nickel-containing raw material, an aqueous solution of the cobalt-containing raw material, and the $M^1$-containing raw material.

The ammonium cation-containing complex forming agent may be, for example, $NH_4OH$, $(NH_4)_2SO_4$, $NH_4NO_3$, $NH_4Cl$, $CH_3COONH_4$, $NH_4CO_3$, or a combination thereof, but is not limited thereto. Meanwhile, the ammonium cation-containing complex former may be used in the form of an aqueous solution, wherein the solvent may be water, or a mixture of water and an organic solvent (specifically, alcohol, etc.) that is uniformly miscible with water.

The basic compound may be a hydroxide of an alkali metal or alkaline earth metal, such as $NaOH$, $KOH$, or $Ca(OH)_2$, a hydrate thereof, or a combination thereof. The basic compound may also be used in the form of an aqueous solution, wherein the solvent may be water, or a mixture of water and an organic solvent (specifically, alcohol, etc.) that is uniformly miscible with water.

The basic compound is added to adjust the pH of the reaction solution, and may be added in an amount such that the pH of the metal solution is 8 to 12.

The coprecipitation reaction may be performed at a temperature ranging from 35°C to 80°C under an inert atmosphere such as nitrogen or argon.

Accordingly, the positive electrode active material precursor containing cations of nickel, cobalt, and $M^1$ can be prepared.

Through the above process, positive electrode active material precursor particles of nickel-cobalt-$M^1$ hydroxide are produced and precipitated in the reaction solution. By controlling the concentrations of the nickel-containing raw material, cobalt-containing raw material and $M^1$-containing raw material, the positive electrode active material precursor can be prepared in which the nickel (Ni) content of the total metal content is 70 mol% or more, 75 mol% or more, preferably 80 mol% or more, more preferably 82 mol% or more. The precipitated positive electrode active material precursor particles can be separated and dried according to a conventional method to produce the positive electrode active material precursor.

Thereafter, the positive electrode active material precursor and the lithium raw material are mixed, and heat treated.

The lithium raw material may be lithium-containing sulfate, nitrate, acetate, carbonate, oxalate, citrate, halide, hydroxide, or oxyhydroxide, but is not particularly limited as long as it is soluble in water. Specifically, the lithium raw material may be $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO_4$, $CH_3COOLi$, or $Li_3C_6H_5O_7$, and any one or a mixture of two or more thereof may be used.

The positive electrode active material precursor and the lithium raw material may be mixed at a molar ratio of 1:1 to 1:1.30. The positive electrode active material precursor and the lithium raw material may be mixed, for example, at a molar ratio of about 1:1, about 1:1.05, about 1:1.07, about 1:1.10, about 1:1.5, about 1:1.20, or about 1:1.30, but are not limited thereto.

The heat treatment may be performed at a temperature ranging from 650°C to 1000°C in the case of a high-Ni NCM-based lithium composite transition metal oxide with a nickel (Ni) content of 70 mol% or more. The heat treatment may be preferably performed, for example, at a temperature ranging from 700°C to 900°C, and more preferably at a temperature ranging from 720°C to 870°C. The formation of the positive electrode active material powder in the form of a single particle and/or quasi-single particle is influenced by the conditions of heat treatment temperature.

Accordingly, the manufactured positive electrode active material can have reduced particle breakage and strain in the crystal structure during the rolling process or charging and discharging of a lithium secondary battery including the same, and can have improved initial resistance characteristics.

The heat treatment may be performed under an air or oxygen atmosphere, for example, for 4 to 12 hours. Specifically, the heat treatment may be performed, for example, for 4 hours or more, 6 hours or more, 8 hours or more, 10 hours or more, and for 12 hours or less, 10 hours or less, 8 hours or less, and 6 hours or less.

Meanwhile, when the lithium nickel-based transition metal oxide containing $M^2$ metal is to be prepared, or when the lithium nickel-based transition metal oxide containing a non-metal for anion substitution at an oxygen sites such as X is to be prepared, an $M^2$ metal-containing raw material and/or an X element-containing raw material may be additionally mixed during the coprecipitation reaction or in the firing step. In this case, the $M^2$ metal-containing raw material may be an acetate, carbonate, nitrate, sulfate, halide, sulfide, or oxide of the $M^2$ metal, and the X element-containing raw material may be a lithium salt of X or an acid containing X.

On the other hand, when it is desired to form a coating layer on the surface of the lithium nickel-based transition metal oxide, after the above heat treatment, a step of mixing the lithium nickel-based transition metal oxide prepared through the heat treatment and the coating raw material and then heat treating them may be further performed. In this case, the mixing may be accomplished by solid-phase mixing or liquid-phase mixing, and the heat treatment may be performed at an appropriate temperature depending on the coating raw material. For example, the heat treatment of the coating process may be performed at a temperature ranging from 200°C to 700°C, or 300°C to 600°C, but is not limited thereto.

Additionally, when manufacturing the positive electrode active material powder of the present invention, it is preferable not to perform a water washing process after the heat treatment. Conventionally, when manufacturing high-nickel (Ni) NCM-based lithium composite transition metal oxides, it was common to perform a water washing process after heat treatment to reduce the lithium by-product content. However, according to the present inventors' research, it has been found that when a water washing process is performed in the production of the lithium nickel-based transition metal oxide in the form of a single particle and/or a quasi-single particle, the surface properties of the lithium nickel-based transition metal oxide deteriorate during the water washing process, and thus the resistance is increased. Therefore, when manufacturing the positive electrode active material powder of the present invention, it is preferable not to perform water washing, but to consume the remaining lithium on the surface of the lithium nickel-based transition metal oxide through the coating layer formation process. In this way, when the positive electrode active material is manufactured without washing the lithium nickel-based transition metal oxide, an increase in resistance due to surface defects can be suppressed.

## Positive Electrode

The positive electrode according to the present invention includes the positive electrode active material powder of the present invention described above. Specifically, the positive electrode includes a positive electrode current collector and a positive electrode active material layer formed on the positive electrode current collector, wherein the positive electrode active material layer includes the positive electrode active material powder according to the present invention. Since the positive electrode active material powder has been described above, a detailed description thereof will be omitted, and only the remaining components will be described in detail below.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, heat-treated carbon, or aluminum or stainless steel having a surface treated with carbon, nickel, titanium, silver, etc. Additionally, the positive electrode current collector may typically have a thickness of 3 to 500 μm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material powder, may optionally include a conductive material and a binder, if necessary.

In this case, the positive electrode active material powder may be included in an amount of 80% to 99% by weight, more specifically 85% to 98.5% by weight, based on the total weight of the positive electrode active material layer, and can exhibit excellent capacity characteristics when included in the above content range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1 to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1 to 15% by weight based on the total weight of the positive electrode active material layer.

The positive electrode may be manufactured according to a conventional positive electrode manufacturing method except for the use of the positive electrode active material powder described above. Specifically, the above positive electrode active material powder and, if necessary, a binder, a conductive material, and a dispersant are dissolved or dispersed in a solvent to prepare a positive electrode slurry composition. This slurry composition can be applied on a positive electrode current collector, and then dried and rolled to produce a positive electrode.

The solvent may be any solvent commonly used in the art, for example, dimethyl sulfoxide (DMSO), isopropyl alcohol, N-methylpyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder and dispersant in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the positive electrode slurry composition on a separate support, peeling a film from the support, and then laminating the film on a positive electrode current collector.

**Electrochemical Device**

Next, an electrochemical device according to the present invention will be described. The electrochemical device according to the present invention includes the positive electrode of the present invention described above. Specifically, the electrochemical device may be a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, heat-treated carbon, copper or stainless steel that is surface-treated with carbon, nickel, titanium, silver, or the like, an aluminum-cadmium alloy, or the like. Additionally, the negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ ($0<\beta<2$), $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material are dissolved or dispersed in a solvent to prepare a negative electrode slurry composition, which may be applied on a negative electrode current collector and dried to produce a negative electrode active material layer. Alternatively, the negative electrode active material layer may be manufactured by casting the negative electrode slurry composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\epsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethylcarbonate (DEC), methylethylcarbonate (MEC), ethylmethylcarbonate (EMC), ethylene carbonate (EC), or propylene carbonate (PC) ; an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

## Example

Hereinafter, examples of the present invention will be described in detail so that those skilled in the art can easily implement the present invention. However, the present invention may be embodied in a variety of forms and is not limited to the examples described herein.

## Example 1

A positive electrode active material precursor $Ni_{0.90}Co_{0.05}Mn_{0.05}(OH)_2$ and LiOH were mixed at a molar ratio of (Ni+Co+Mn):Li of 1:1.05, and then calcined and dried to produce a large-particle-diameter lithium nickel-based transition metal oxide having particle size characteristics as shown in Table 1 below.

A positive electrode active material precursor $Ni_{0.88}Co_{0.06}Mn_{0.06}(OH)_2$ and LiOH were mixed at a molar ratio of (Ni+Co+Mn):Li of 1:1.05, and then calcined and dried to produce a small-particle-diameter lithium nickel-based transition metal oxide having particle size characteristics as shown in Table 1 below.

The prepared large-particle-diameter lithium nickel-based transition metal oxide and small-particle-diameter lithium nickel-based transition metal oxide were mixed at a weight ratio of 60:40.

## Examples 2 to 5 and Comparative Examples 1 to 2

Large-particle-diameter and small-particle-diameter lithium nickel-based transition metal oxides having particle size characteristics as shown in Table 1 below were prepared and mixed at a weight ratio of 60:40.

## Experimental Example 1: Confirmation of particle size characteristics of positive electrode active material

The particle size characteristics of each mixed positive electrode active material prepared in the above examples and comparative examples were confirmed by the following method.

0.005 g of the mixed positive electrode active material was dispersed in $H_2O$ as a dispersion medium, and then introduced into a laser diffraction particle size measuring device (Malvern MASTERSIZER 3000) and irradiated with an ultrasonic wave at about 28 kHz at an output of 60 W to obtain a volume cumulative particle size distribution graph of each positive electrode active material. $D_L$, $D_S$, $D_{50}$, $D_{max}$, $D_{min}$, $I_L$, $I_S$, $A_L$ and $A_S$ were derived from the graph, and the B value was calculated using Equation 1 below to obtain the data shown in Table 1 below.

[Equation 1]

$$B = (D_{max}-D_L) / (D_S-D_{min})$$

wherein $D_{max}$ is the maximum particle diameter of the positive electrode active material, $D_{min}$ is the minimum particle diameter of the positive electrode active material, $D_L$ is the median particle diameter of the peak $P_L$, and $D_S$ is the median particle diameter of the peak $P_S$.

[Table 1]

|  | $D_{min}$ | $D_S$ | $D_L$ | $D_{max}$ | $D_{50}$ | $I_S/I_L$ | $D_L$-$D_S$ | $A_S/A_L$ | B |
|---|---|---|---|---|---|---|---|---|---|
| Example 1 | 0.76 | 2.70 | 14.1 | 27.4 | 12.5 | 0.69 | 11.4 | 0.57 | 6.9 |
| Example 2 | 1.13 | 3.90 | 15.2 | 31.1 | 13.1 | 0.62 | 11.3 | 0.55 | 5.7 |
| Example 3 | 0.59 | 2.40 | 14.1 | 31.1 | 11.1 | 0.78 | 11.7 | 0.66 | 9.4 |
| Example 4 | 0.76 | 2.70 | 15.2 | 40.1 | 13.5 | 0.59 | 12.5 | 0.59 | 12.8 |
| Example 5 | 0.76 | 2.70 | 16.2 | 45.6 | 13.8 | 0.61 | 13.5 | 0.55 | 15.2 |
| Comparative Example 1 | 0.50 | 4.20 | 13.7 | 27.4 | 8.5 | 1.25 | 9.5 | 0.89 | 3.7 |
| Comparative Example 2 | 0.76 | 2.70 | 10.5 | 45.6 | 7.5 | 1.21 | 7.8 | 0.84 | 18.3 |

Experimental Example 2: Rolling Density of Positive Electrode Active Material

The rolling density (g/cm$^3$) and the amount of fine powder generated (volume %) of each positive electrode active material prepared in the examples and comparative examples was measured using a density meter (Caver Pellet Press). Specifically, 3 g of each positive electrode active material prepared in the above examples and comparative examples was subdivided and filled tightly into a cylindrical metal mold with a diameter of 20 mm, and then a pressure of 9 tons was applied to derive the rolling density (g/cm$^3$) from the weight and volume of the pellets manufactured. After the pressure of 9 tons was applied, the particle size distribution of the positive electrode active material was measured in the same manner as in Experimental Example 1, and the generated amount of fine powder less than 1 $\mu$m (volume %) was measured. The results are shown in Table 2 below.

[Table 2]

|  | Rolling density (g/cm$^3$) | Amount of fine powder generated (volume%) |
|---|---|---|
| Example 1 | 3.72 | 0.5 |
| Example 2 | 3.68 | 0.45 |
| Example 3 | 3.78 | 0.7 |
| Example 4 | 3.77 | 0.4 |
| Example 5 | 3.76 | 0.35 |
| Comparative Example 1 | 3.55 | 5.5 |
| Comparative Example 2 | 3.49 | 4.7 |

Referring to Table 2, it can be seen that the rolling density and amount of fine powder generated in Examples 1 to 5 are superior to those of Comparative Examples 1 and 2.

**Experimental Example 3: Evaluation of High Temperature Storage Characteristics**

A coin half cell including each of the positive electrode active materials of the examples and comparative examples was manufactured and then charged to 4.25V. Then, two electrodes (loading amount: 400 mg) charged at a voltage of 4.25V and one separator were placed on the bottom of the coin cell and fixed with a gasket. Thereafter, 15 ul of an electrolyte (DEC REF.) was vacuum injected twice, and each side was vacuum sealed to a thickness of 1 cm using an aluminum pouch with a size of 6.5 X 5 cm. Here, the vacuum sealing refers to sealing under monocell vacuum sealing conditions of 95kPa/93kPa. The coin half cells manufactured as above were stored in a convection oven at 60°C for 10 weeks, and then the amount of gas generated (volume change rate, %) was evaluated by comparing a change in the cell volume. The results are shown in Table 3 below.

**Experimental Example 4: Evaluation of High Temperature Lifespan and Resistance Characteristics**

A monocell including a positive electrode and a negative electrode was manufactured. In the case of the positive electrode, each of the positive electrode active material powders prepared in the examples and comparative examples was applied to a current collector and dried to prepare the positive electrode. In the case of the negative electrode, natural graphite and artificial graphite were mixed in a ratio of 5:5 and used as a negative electrode active material, and the negative electrode was prepared using 95.6 wt% of the negative electrode active material, 0.9 wt% of a conductive material, and 3.4 wt% of a binder. The loading of the negative electrode was 10.7 mg/cm$^2$, and the N/P ratio of the negative electrode and positive electrode was fixed at 1.08.

The capacity retention rate (%) of the monocell including each of the positive electrode active materials of the examples and comparative examples was measured for 300 cycles at a temperature of 45°C, and the resistance increase rate was calculated by measuring a resistance after 300 cycles compared to the initial resistance. The results are shown in Table 3 below.

Capacity retention rate (%) = (discharge capacity at 300$^{th}$ cycle/initial discharge capacity) $\times$ 100

Resistance increase rate (%) = (resistance after 300 discharges/initial resistance) $\times$ 100

[Table 3]

| | High temperature lifespan (300 cycles) | | Volume change rate (%) |
|---|---|---|---|
| | Capacity retention rate (%) | Resistance increase rate (%) | |
| Example 1 | 85 | 135 | 11 |
| Example 2 | 87 | 142 | 7 |
| Example 3 | 83 | 133 | 12 |
| Example 4 | 88 | 148 | 6 |
| Example 5 | 88 | 145 | 7 |
| Comparative Example 1 | 76 | 210 | 25 |
| Comparative Example 2 | 74 | 213 | 29 |

Referring to Table 3, it can be seen that in the case of Examples 1 to 5 that satisfy the range of B value limited to control the shapes of a peaks due to large-diameter particles and a peak due to small-diameter particles in a mixed positive electrode active material in which large-diameter and small-diameter particles with bimodal particle size characteristics are mixed, high temperature performance, i.e., capacity retention rate and resistance increase rate at high temperature, is significantly superior to those of the comparative examples. In addition, in the case of the Example, as shown in Table 2, it was confirmed that although the rolling density was excellent, the amount of fine powder generated was small, reducing side reactions, and as a result, the volume change rate was also superior to that of the comparative examples.

**Claims**

1. A positive electrode active material including:

   a large-particle-diameter lithium nickel-based transition metal oxide that is in the form of a secondary particle that is an aggregate of primary particles; and
   a a small-particle-diameter lithium nickel-based transition metal oxide that is in the form of at least one of a single particle that is formed of one nodule or a quasi-single particle that is a composite of 30 or less nodules, wherein wherein
   a volume cumulative particle size distribution graph obtained from particle size distribution (PSD) of the positive electrode active material includes a peak $P_S$ on a side with the small particle size and a peak $P_L$ on a side with the large particle size, and a B value derived from Equation 1 below is 4.0 to 17.0:

[Equation 1]

$$B = (D_{max}-D_L) / (D_S-D_{min})$$

wherein $D_{max}$ is a maximum particle diameter of the positive electrode active material, $D_{min}$ is a minimum particle diameter of the positive electrode active material, $D_L$ is a median particle diameter of the peak $P_L$, and $D_S$ is a median particle diameter of the peak $P_S$.

2. The positive electrode active material according to claim 1, wherein the positive electrode active material has a $D_{50}$ of from 7 $\mu$m to 17 $\mu$m, $D_{max}$ is 56 $\mu$m or less, and $D_{min}$ is0.1 $\mu$m or more.

3. The positive electrode active material according to claim 1, wherein $D_L$ is 5 $\mu$m to 20 $\mu$m and $D_S$ is 1 $\mu$m to 10 $\mu$m.

4. The positive electrode active material according to claim 1, wherein a difference between $D_L$ and $D_S$ is from 6 $\mu$m to 15 $\mu$m.

5. The positive electrode active material according to claim 1, wherein a ratio of a maximum value $I_S$ of the peak Ps to the maximum value $I_L$ of the peak $P_L$ ($I_S/I_L$) is 0.2 to 1.5.

6. The positive electrode active material according to claim 1, wherein a ratio of an integrated area $A_S$ of the peak Ps to the integrated area $A_L$ of the peak $P_L$ ($A_S/A_L$) is 0.4 to 1.0.

7. The positive electrode active material according to claim 1, wherein a weight ratio of the large-particle-diameter lithium nickel-based transition metal oxide to the small-particle-diameter lithium nickel-based transition metal oxide is from 90:10 to 30:70.

8. The positive electrode active material according to claim 1, wherein the lithium nickel-based transition metal oxide is represented by the following chemical formula (1):

[Chemical Formula 1] $Li_{1+x}Ni_aCo_bM^1_cM^2_dO_{2-e}X_e$

wherein $M^1$ includes one or more selected from Mn or Al; $M^2$ includes one or more element selected from the group consisting of Ba, Ca, Mg, Sr, B, W, Zr, Y, Ti, V, Ta, and Nb; X includes one or more element selected from the group consisting of N, P, S, F and Cl; and $0 \leq x \leq 0.5$, $0.5 \leq a < 1$, $0 < b \leq 0.4$, $0 < c \leq 0.4$, $0 \leq d \leq 0.05$, and $0 \leq e \leq 0.05$.

9. A positive electrode comprising the positive electrode active material according to any one of claims 1 to 8.

10. A lithium secondary battery comprising the positive electrode of claim 9.

## INTERNATIONAL SEARCH REPORT

| | International application No. |
|---|---|
| | **PCT/KR2023/021344** |

| A. | CLASSIFICATION OF SUBJECT MATTER |
|---|---|

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/05(2010.01); H01M 10/052(2010.01); H01M 10/0525(2010.01); H01M 4/1391(2010.01); H01M 4/48(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 양극 활물질(cathode active material), 리튬 니켈계 전이금속 산화물(lithium nickel-based transition metal oxide), 단입자(single particle), 2차 입자 (secondary particle), 입경(diameter)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-1447453 B1 (SANTOKU CORPORATION) 06 October 2014 (2014-10-06)<br>See abstract; claims 1-3, 5, 8 and 11-12; paragraphs [0003]-[0005], [0031], [0054] and [0098]; and table 2, examples 6-12. | 1-7,9-10 |
| Y | | 8 |
| Y | KR 10-2020-0070649 A (LG CHEM, LTD.) 18 June 2020 (2020-06-18)<br>See claims 1-2, 4-6 and 7-8. | 8 |
| A | JP 7148937 B2 (SHINSHU UNIVERSITY et al.) 06 October 2022 (2022-10-06)<br>See entire document. | 1-10 |
| A | JP 6017364 B2 (JX NIPPON MINING & METALS CORP.) 26 October 2016 (2016-10-26)<br>See entire document. | 1-10 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/021344** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2014-0342230 A1 (PANASONIC CORPORATION) 20 November 2014 (2014-11-20)<br>See entire document. | 1-10 |

Form PCT/ISA/210 (second sheet) (July 2022)

## INTERNATIONAL SEARCH REPORT
### Information on patent family members

International application No.

**PCT/KR2023/021344**

| Patent document cited in search report | | | Publication date (day/month/year) | Patent family member(s) | | | Publication date (day/month/year) |
|---|---|---|---|---|---|---|---|
| KR | 10-1447453 | B1 | 06 October 2014 | CN | 101584062 | A | 18 November 2009 |
| | | | | CN | 101584062 | B | 25 November 2015 |
| | | | | EP | 2110871 | A1 | 21 October 2009 |
| | | | | EP | 2110871 | A4 | 14 April 2010 |
| | | | | EP | 2110871 | B1 | 02 May 2012 |
| | | | | JP | 2010-078784 | A1 | 30 April 2010 |
| | | | | JP | 4287901 | B2 | 01 July 2009 |
| | | | | KR | 10-2009-0094856 | A | 08 September 2009 |
| | | | | US | 2010-0019194 | A1 | 28 January 2010 |
| | | | | US | 8920687 | B2 | 30 December 2014 |
| | | | | WO | 2008-078784 | A1 | 03 July 2008 |
| KR | 10-2020-0070649 | A | 18 June 2020 | KR | 10-2543571 | B1 | 15 June 2023 |
| | | | | US | 2020-0185714 | A1 | 11 June 2020 |
| JP | 7148937 | B2 | 06 October 2022 | CN | 116368638 | A | 30 June 2023 |
| | | | | EP | 4231375 | A1 | 23 August 2023 |
| | | | | JP | 2022-064294 | A | 25 April 2022 |
| | | | | US | 2023-0238521 | A1 | 27 July 2023 |
| | | | | WO | 2022-080108 | A1 | 21 April 2022 |
| JP | 6017364 | B2 | 26 October 2016 | JP | 2014-199778 | A | 23 October 2014 |
| US | 2014-0342230 | A1 | 20 November 2014 | CN | 103782417 | A | 07 May 2014 |
| | | | | CN | 103782417 | B | 02 March 2016 |
| | | | | JP | 2015-046711 | A1 | 26 March 2015 |
| | | | | JP | 5877349 | B2 | 08 March 2016 |
| | | | | US | 9508992 | B2 | 29 November 2016 |
| | | | | WO | 2013-046711 | A1 | 04 April 2013 |

Form PCT/ISA/210 (patent family annex) (July 2022)

**REFERENCES CITED IN THE DESCRIPTION**

**Patent documents cited in the description**

- KR 1020220184870